# EUROPEAN PATENT SPECIFICATION

(11) **EP 4 389 590 B1**
(45) Date of publication and mention of the grant of the patent: **27.05.2026**
(21) Application number: 22214511.2
(22) Date of filing: 19.12.2022
(51) Int. Cl.: B64C 1/14, E05B 47/02, E05B 81/18, E05B 81/20

(54) **AIR- OR SPACECRAFT HATCH AND AIR- OR SPACECRAFT**
LUFT- ODER RAUMFAHRZEUGKLAPPE UND LUFT- ODER RAUMFAHRZEUG
TRAPPE D'AIR OU D'ENGIN SPATIAL ET ENGIN SPATIAL D'AIR OU D'AIR

(43) Date of publication of application: 26.06.2024
(73) Proprietor: Airbus Operations GmbH, 21129 Hamburg (DE)
(72) Inventor: Ohle, Sören, 21129 Hamburg (DE)

(56) References cited:
- US-A- 4 473 201
- US-A- 5 823 473
- US-B1- 6 341 748

## Description

The invention relates to an air- or spacecraft hatch. The invention is furthermore concerned with an aircraft or spacecraft containing such an aircraft or spacecraft hatch.

Aircraft doors in a fuselage cell of an aircraft must transfer considerable peripheral loads. The greater the diameter of a fuselage cell the higher are the peripheral loads which arise in the fuselage cell structure. The load transfer between the aircraft door and the fuselage cell structure is commonly provided through a multiple of hooks swivel mounted on a shaft which engage round substantially horizontally fixed shaft sections in the area of the fuselage cell.

High tensile forces act during the flight, in particular, in the case of relatively large aircraft doors or hatches, such as cargo hold hatches, for example. In addition, high load differences, for example in comparison between an unloaded and loaded cargo hold, can lead on ground to deformations or deflections occurring in the region of the hatch gaps, which deformations or deflections can impair the correct orientation of the hatch locking elements with respect to one another.

US 4 473 201 A relates to a cargo door.

Aspects of the invention may provide solutions for improving locking and securing of aircraft or spacecraft doors under different loads.

According to the invention, this problem is solved in each case by the subject matters of the independent claims.

According to a first aspect of the invention, an aircraft or spacecraft hatch is provided. The air- or spacecraft hatch comprises a hatch frame and a hatch locking device which is mounted to the hatch frame. The hatch locking device comprises a drivable spindle drive that drives at least one locking bolt of the hatch locking device. Further, the air- or spacecraft hatch comprises a pull-in device for forcing the air- or spacecraft hatch to close which is arranged at a lateral side of the air- or spacecraft hatch. Moreover, the air- or spacecraft hatch comprises a drive unit which is mounted to the hatch frame and which simultaneously drives the drivable spindle drive and the pull-in device.

According to a second aspect of the invention, an aircraft or spacecraft comprising an air- or spacecraft hatch according to the invention is provided.

A fundamental concept of the invention is to provide an aircraft or spacecraft door, which can also be used when there is a misalignment between a fuselage frame and the hatch locking device or the locking bolt, respectively. Thereby, the pull-in device assists for finally closing the hatch. For example, an overhead drive of the hatch is assisted by the pull-in device in case of closing the hatch such that the hatch completely closes. Moreover, the hatch locking device can transmit forces in X-, Y- and Z-direction and torques, or also called moments, in Y- and Z-direction in case of movement of the aircraft or spacecraft hatch in relation to the fuselage frame by loads during flight, for example, or in case of self-centering during a locking process in case of misalignment caused by loading differences, for example.

The lateral side extends along the orientation of the hatch frame.

A particular advantage in the solution according to an aspect of the invention is that manufacturing tolerances of the hatch panel and/or the hatch frame can be compensated. The final door closing and the latching functions take place sequentially. Additionally, the hatch locking device makes self-centering of the hatch during closure and self-centering of the locking bolt during locking possible by the conical bush reception. Moreover, the drivable spindle drive is self-securing.

Advantageous embodiments and further developments emerge from the description with reference to the figures.

According to some further aspects the aircraft or spacecraft hatch according to the invention further comprises a drive system which mechanically couples the drive unit with the pull-in device and the hatch locking device. Thus, the drive unit does not need to be arranged next to the hatch locking device. In particular when the aircraft hatch comprises more than one hatch locking device the drive system can couple each hatch locking device to the drive unit. Furthermore, the drive system can be used to provide the pull-in device and the hatch locking device with a different transmission or coupling point.

The drivable spindle drive can extend in a longitudinal axis and can be fixed in relation to the hatch frame of the aircraft or spacecraft hatch along the longitudinal axis. The at least one locking bolt which is driven by the drivable spindle drive can be guided along the longitudinal axis. Furthermore, the hatch locking device can comprise at least one adjustment bush assembly being mounted on a fuselage frame. The at least one adjustment bush assembly can comprise a first eccentric bush having a bolt receptacle which is oriented centrally along the longitudinal axis for receiving the at least one locking bolt such that the hatch locking device is positive-locking connectable in two axles both being perpendicular to the longitudinal axis.

Optionally, the at least one adjustment bush assembly can further comprise a second eccentric bush which partly surrounds the first eccentric bush on its outer surface, wherein the first eccentric bush and the second eccentric bush each basically comprise a same axle offset. Thus, the axle offset of each eccentric bush can be combined to provide many different positions for the bolt receptacle to receive the locking bolt in case the longitudinal axis of the hatch locking device is offset to the longitudinal axis of the adjustment bush assembly. Furthermore, in case the longitudinal axis of the hatch locking device corresponds to the longitudinal axis of the adjustment bush assembly, the first eccentric bush and the second eccentric bush both having the same axle offset can be balanced out such that the axle offset provided by the first eccentric bush is compensated by the axle offset of the second eccentric bush.

Further, the second eccentric bush can have a conical shape and can comprise teeth on a front side for rotating the second eccentric bush in relation to the first eccentric bush, wherein the at least one adjustment bush assembly further comprises a nut interacting with the first eccentric bush for pressing the second eccentric bush between the first eccentric bush and the fuselage frame. Thus, the conical shape can increase the axial load capability. The radial preload prevents the adjustment bush assembly from rotating as a result of the torque caused by the transverse force and eccentricity or as a result of the friction between the locking bolt and the first eccentric bush. Hence, a continuous adjustment of the offset of the first eccentric bush and the second eccentric bush can be provided. The centric recess of the second eccentric bush assist to rotate the second eccentric bush in relation to the first eccentric bush. Furthermore, an axial adjustment of the locking bolt in relation to the first eccentric bush can be provided by a selection of the first eccentric bush with an appropriate inner diameter.

Optionally, the at least one adjustment bush assembly can further comprise a shim washer for adapting a distance between the at least one locking bolt and the first eccentric bush along the longitudinal axis.

Alternatively or additionally, the first eccentric bush can be configured as a serrated, conical eccentric bush and comprises teeth on a front side for avoiding a rotation of the serrated, conical eccentric bush in relation to the fuselage frame. That means the first eccentric bush has an outer conical shape and comprises teeth on a front side for avoiding a rotation in relation to the second conical bush whereby the second conical bush is rotationally fixed in relation to the fuselage frame by serration. Furthermore, an axial adjustment of the locking bolt in relation to the first eccentric bush can be provided by a selection of the first eccentric bush with an appropriate inner diameter.

According to some further aspects of the aircraft or spacecraft hatch according to the invention, the drive system comprises at least one of the following: a main drive shaft, a drive belt or a worm drive.

According to some further aspects of the aircraft or spacecraft hatch according to the invention, the pull-in device comprises an eccentric cam disc which is rotationally coupled to the drive system and configured to interact with a pin being mounted on a fuselage frame. The eccentric cam disc can have a pull-in element being arranged and configured to interact with the pin for forcing the air- or spacecraft hatch to close. Due to different loading conditions the aircraft or spacecraft hatch might not close completely without assistance. Instead small gaps between the fuselage frame and the aircraft or spacecraft hatch can remain such that the locking bolt can not be received in a first eccentric bush of the hatch locking device. In particular, the pull-in device can be used when the small gaps have a distance from the pin to the eccentric cam disc of 50 mm or less, preferably of 40 mm or less. In other words, the pull-in device can be used when the misalignment between the pin and the eccentric cam disc is 50 mm or less. Therefore, the pull-in device is configured to interact with the pin to completely close the aircraft or spacecraft hatch and to align the locking bolt to the bolt receptacle of the first eccentric bush.

According to some further aspects of the aircraft or spacecraft hatch according to the invention, the eccentric cam disc comprises a first section which is configured to transfer a radial force between the pin and the eccentric cam disc, and a second section which is configured such that the pin basically corresponds to a rotational axis of the eccentric cam disc during rotation. During rotation of the eccentric cam disc the pin sequentially moves through the first section and the second section. The radial force is oriented perpendicular to the longitudinal axis of the hatch locking device and the drive system, respectively.

In the first section the eccentric cam disc or the pull-in element can grab the pin, wherein the radial force forces the aircraft hatch to close such that the small gaps decrease continuously. The first section represents a circle segment from about 0° to about 120° of the eccentric cam disc. Additionally, the first section basically corresponds to an idle traffic of the locking bolt between an unlocked position and entering the bolt receptacle of the first eccentric bush. In the unlocked position there might be an offset of the locking bolt and the bolt receptacle. Therefore, the first section can minimize the offset and bring the locking bolt and the bolt receptacle into alignment for latching the air- or spacecraft hatch.

In the second section the eccentric cam disc is configured to keep the pin in vicinity to the rotational axis of the eccentric cam disc such that, during rotation of the eccentric cam disc, the pin is not manipulated by the eccentric cam disc and the pull-in element, respectively. The second section represents a circle segment from about 120° to about 360° of the eccentric cam disc. Additionally, the second section basically corresponds to a latching traffic of the locking bolt between entering the bolt receptacle of the first eccentric bush and the locked position in which the locking bolt is received in the first eccentric bush. In the second section there is basically not any offset of the locking bolt and the bolt receptacle, otherwise the locking bolt could not enter the bolt receptacle.

According to some further aspects of the aircraft or spacecraft hatch according to the invention, the pull-in device further comprises a gear unit arranged between the eccentric cam disc and the drive system for synchronizing the rotation of the eccentric cam disc and the rotation of the drivable spindle drive such that the aircraft or spacecraft hatch is at least almost closed before the bolt receptacle receives the locking bolt. Thus, the rotation of the eccentric cam disc can be adapted to the rotation of the drivable spindle drive such that the eccentric cam disc may turn once while the drivable spindle drive may turn multiple times.

According to some further aspects of the aircraft or spacecraft hatch according to the invention, the gear unit is configured as a planetary gear. The planetary gear can increase the torque and hence the radial force working on the pin for pulling in/closing the aircraft hatch. The planetary gear comprises a centrally pivoted sun gear, a ring gear and several planet gears. The centrally pivoted sun gear may correspond to the drive system and the ring gear may correspond to the eccentric cam disc. The several planet gears may be fixed to the hatch frame.

According to some further aspects of the aircraft or spacecraft hatch according to the invention, the gear unit has a transmission ratio in a range from about 8:1 to about 12:1 between the eccentric cam disc and the drive system. Hence, the gear unit can increase the torque and further the radial force working on the pin for closing the aircraft hatch. Furthermore, the angle of rotation of the eccentric cam disc can be decreased in relation to the angle of rotation of the drivable spindle drive such that the eccentric cam disc may turn once while the drivable spindle drive may turn multiple times.

According to some further aspects of the aircraft or spacecraft hatch according to the invention, the eccentric cam disc comprises a push-out element for forcing the air- or spacecraft hatch to open. Thus, in addition to the pull-in function the pull-in device further provides a push-out function. In particular, the eccentric cam disc comprises the pull-in element for closing small gaps between the air- or spacecraft hatch and the fuselage frame, and comprises the push-out element for opening small gaps between the air- or spacecraft hatch and the fuselage frame to overcome frictional forces due to varying loading conditions. Moreover, the initial door opening and unlatching functions take place sequentially.

According to some further aspects the aircraft or spacecraft hatch according to the invention comprises at least two hatch locking devices, wherein at least one hatch locking device comprises two opposing locking bolts and wherein at least one hatch locking device comprises one locking bolt. The hatch locking device with one locking bolt can be arranged at the lateral side of the aircraft or spacecraft hatch. The hatch locking device with two locking bolts can be arranged at a horizontal side of the aircraft or spacecraft hatch, wherein the horizontal side extends perpendicular to the orientation of the hatch frame. Therefore, the hatch locking device with two locking bolts can be arranged in relation to the fuselage frame such that both adjustment bush assemblies can be supported by two fuselage frames, one fuselage frame being on each side. The two opposing locking bolts are driven by the drivable spindle drive and are guided along the longitudinal axis. Both locking bolts are driven by the drivable spindle drive simultaneously. Therefore, one of the two locking bolts can comprise a left-hand thread, wherein the other locking bolt can comprise a right-hand thread.

Further, the at least one adjustment bush assembly can comprise two adjustment bush assemblies each being mounted on the fuselage frame. The two adjustment bush assemblies might be configured to receive the two opposing locking bolts such that the hatch locking device is positive-locking connectable in the longitudinal axis. Thus, the hatch locking device can have a positive-locking connection in all directions, in particular in X-, Y- and Z-direction, wherein the longitudinal axis represents the X-direction. The hatch locking device cannot pop out of a locked position.

According to some aspects of the aircraft or spacecraft according to the invention, the aircraft or spacecraft hatch is configured as a cargo hold hatch.

The present invention is explained more specifically below on the basis of the exemplary embodiments indicated in the schematic figures, in which:
- Fig. 1A-1D: show a schematic illustration of an aircraft hatch according to an embodiment of the invention with a pull-in device, wherein Fig. 1A shows the pull-in device in a starting condition Fig. 1B and 1C show the pull-in device in an intermediate condition and Fig. 1D shows the pull-in device in a final condition;
- Fig. 2: shows a schematic illustration of an eccentric cam disc according to a further embodiment of the invention in five different angles of rotation;
- Fig. 3: shows a schematic illustration of another eccentric cam disc according to a further embodiment of the invention in five different angles of rotation;
- Fig. 4: shows a schematic illustration of an aircraft hatch according to another embodiment of the invention;
- Fig. 5: shows a schematic illustration of a hatch locking device according to an embodiment of the invention with two opposing locking bolts in a locked position;
- Fig. 6: shows a schematic illustration of an aircraft hatch according to a further embodiment of the invention with six hatch locking devices each having one locking bolt and with three hatch locking devices each having two locking bolts; and
- Fig. 7: shows a schematic illustration of an aircraft according to an embodiment of the invention with an aircraft hatch according to a further embodiment of the invention comprising a hatch locking device.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

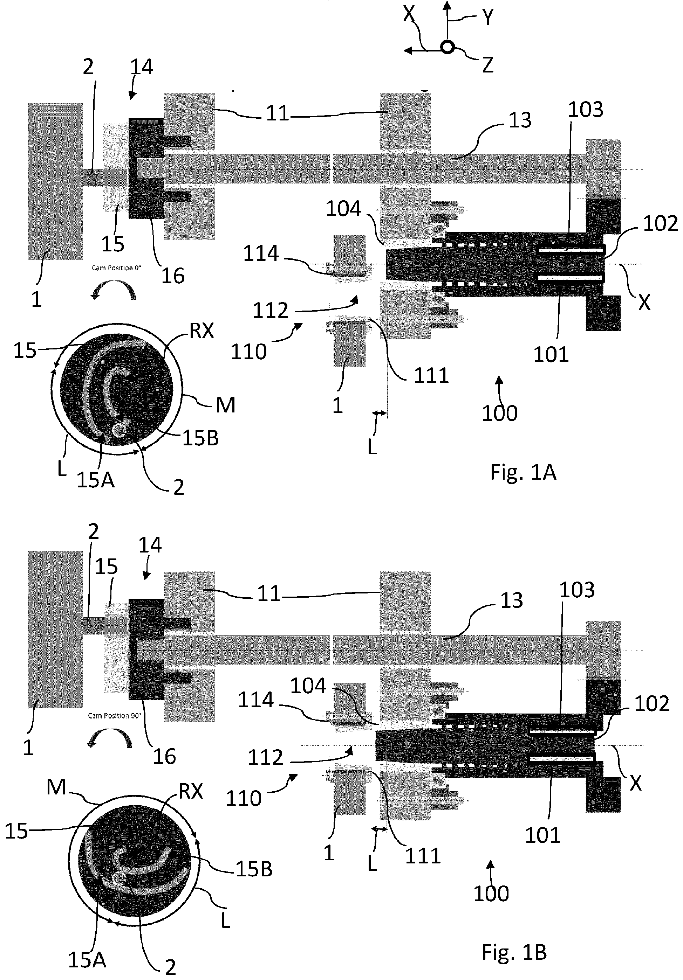

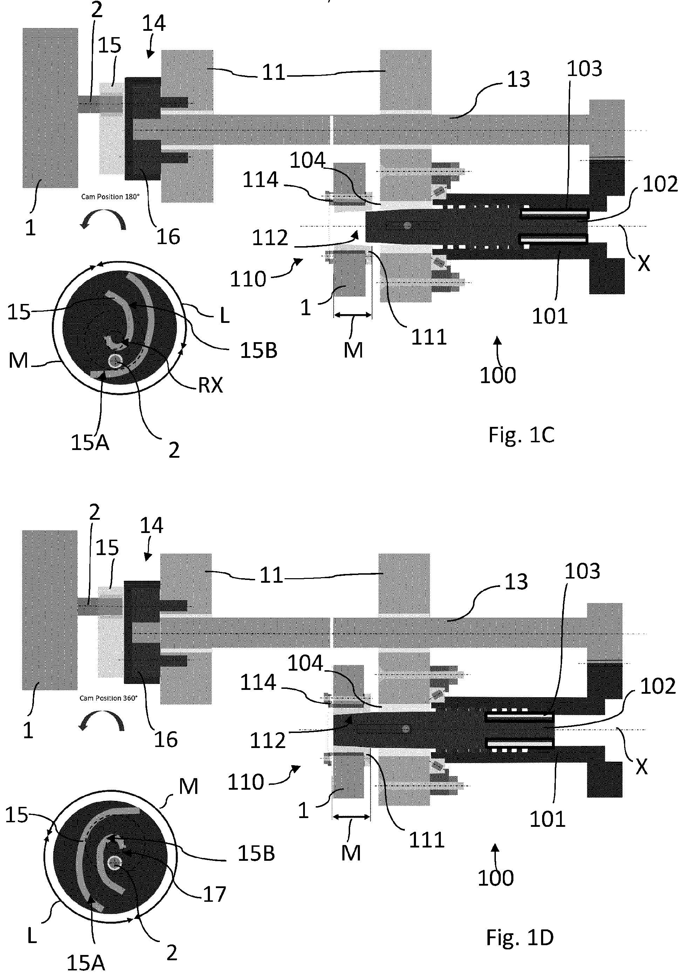

Fig. 1A, 1B, 1C, 1D show a schematic illustration of an aircraft hatch 10 with a pull-in device 14, wherein Fig. 1A shows the pull-in device 14 in a starting condition Fig. 1B and 1C show the pull-in device 14 in an intermediate condition and Fig. 1D shows the pull-in device 14 in a final condition.

The aircraft hatch 10 comprises a hatch frame 11, a hatch locking device 100, a drive unit 12, a drive system 13 and the pull-in device 14.

The hatch locking device 100 is mounted to the hatch frame 11. A drivable spindle drive 101 of the hatch locking device 100 is fixed in relation to the hatch frame 11 along the longitudinal axis X. The drivable spindle drive 101 drives at least one locking bolt 102 of the hatch locking device 100.

The drive unit 12 (not shown in Fig. 1A, 1B, 1C, 1D) is mounted to the hatch frame 11 and simultaneously drives the drivable spindle drive 101 and the pull-in device 14.

The drive system 13 mechanically couples the drive unit 12 with the hatch locking device 100. Therefore, the drive system 13 comprises a main drive shaft.

The pull-in device 14 is configured to force the aircraft hatch 10 to close. Thereby, the pull-in device 14 comprises a hollow eccentric cam disc 15. The hollow eccentric cam disc 15 is mechanically coupled to the drive system 13 and configured to interact with a pin 2 mounted on a fuselage frame 1. The pull-in device 14 is arranged at a lateral side of the aircraft hatch 10 and fixed to the hatch frame 11. In particular, the hollow eccentric cam disc 15 can have a pull-in element 15A being arranged and configured to interact with the pin 2 for forcing the aircraft hatch 10 to close.

Further, the hollow eccentric cam disc 15 comprises a push-out element 15B for forcing the aircraft hatch 10 to open. Therefore, the hollow eccentric cam disc 15 comprises the pull-in element 15A for closing small gaps between the air- hatch 10 and the fuselage frame 1, and comprises the push-out element 15B for opening small gaps between the air- or spacecraft hatch 10 and the fuselage frame 1.

Optionally, the hollow eccentric cam disc 15 comprises a first section L which is configured to transfer a radial force between the pin 2 and the eccentric cam disc 15. Furthermore, the hollow eccentric cam disc 15 exemplarily comprises a second section M which is configured such that the pin 2 basically corresponds to a rotational axis RX of the eccentric cam disc 15 during rotation. In the first section L the pull-in element 15A can grab the pin 2, wherein the radial force forces the aircraft hatch 10 to close such that the small gaps are getting closer continuously. The first section L represents a circle segment from about 0° to about 120° of the eccentric cam disc, for example. Additionally, the first section L basically corresponds to an idle traffic L of the locking bolt 102 between an unlocked position and entering the bolt receptacle 112 of the first eccentric bush 111. In the unlocked position there might be an offset of the locking bolt 102 and the bolt receptacle 112. Therefore, the first section L can minimize the offset and bring the locking bolt 102 and the bolt receptacle 112 into alignment for latching the aircraft hatch 10. In the second section M the hollow eccentric cam disc 15 is configured to keep the pin 2 in vicinity to the rotational axis RX of the eccentric cam disc 15 such that, during rotation of the hollow eccentric cam disc 15, the pin 2 is not manipulated by the hollow eccentric cam disc 15 and the pull-in element 15A, respectively. The second section M represents a circle segment from about 120° to about 360° of the hollow eccentric cam disc 15. Additionally, the second section M basically corresponds to a latching traffic M of the locking bolt 102 between entering the bolt receptacle 112 of the first eccentric bush 111 and the locked position in which the locking bolt 102 is received in the first eccentric bush 111. In the second section M there is basically no offset of the locking bolt 102 and the bolt receptacle 112, otherwise the locking bolt 102 could not enter the bolt receptacle 112.

Further, the pull-in device 14 comprises a planetary gear 16. The planetary gear 16 is arranged between the hollow eccentric cam disc 15 and the drive system 13 for synchronizing the rotation of the hollow eccentric cam disc 15 and the rotation of the drivable spindle drive 101 such that the aircraft hatch 10 is at least almost closed before the bolt receptacle 112 receives the locking bolt 102.

In the starting condition the pin 2 exemplarily points to an edge region of the hollow eccentric cam disc 15. The longitudinal axis X of the hatch locking device 100 and the locking bolt 102, respectively, is offset to a longitudinal axis of the first eccentric bush 111, wherein the offset is more than an offset which can be fixed by self-centering of the conical locking bolt 102. Therefore, the locking bolt 102 is not able to be driven into the bolt receptacle of the first eccentric bush 111. For example, the hollow eccentric cam disc 15 is in a reference position having an angle of rotation of 0°, as it is illustrated in Fig. 1A.

In the first intermediate condition as illustrated in Fig. 1B the pin 2 is in contact with the pull-in element 15A and under load. Alternatively, the pin 2 is in contact with the push-out element 15B in case of unlatching/opening the aircraft hatch 10. The pin 2 engages into the hollow eccentric cam disc 15 in the first section L. Thereby, the locking bolt 102 has only a minimum or none offset to the bolt receptacle 112, wherein the locking bolt 102 has not entered the bolt receptacle 112. Preferably, the minimum offset is less than an offset which can be fixed by self-centering of the conical locking bolt 102. For example, the hollow eccentric cam disc 15 has an angle of rotation of 90° based on the reference position, as it is illustrated in Fig. 1B.

In the second intermediate condition as illustrated in Fig. 1C the pin 2 might be but does not need to be in contact with the pull-in element 15A in case of latching/closing the aircraft hatch 10. Alternatively, the pin 2 might be but does not need to be in contact with the push-out element 15B in case of unlatching/opening the aircraft hatch 10. The pin 2 engages into the hollow eccentric cam disc 15 in the second section M. Thereby, the locking bolt 102 has only a minimum or none offset to the bolt receptacle 112, wherein the locking bolt 102 has entered the bolt receptacle 112. For example, the hollow eccentric cam disc 15 has an angle of rotation of 180° based on the reference position, as it is illustrated in Fig. 1C.

In the final condition as illustrated in Fig. 1D the pin 2 is neither in contact with the pull-in element 15A nor with the push-out element 15B. The pin 2 engages into the hollow eccentric cam disc 15 in the second section M. Thereby, the locking bolt 102 is completely received in the bolt receptacle 112. The longitudinal axis X of the locking bolt 102 corresponds to the longitudinal axis of the first eccentric bush 111. For example, the hollow eccentric cam disc 15 has an angle of rotation of 360° based on the reference position, as it is illustrated in Fig. 1D. The final condition of the hollow eccentric cam disc 15 corresponds to the locked position of the hatch locking device 100. In the final condition/locked position there is a radial gap 17 between the hollow eccentric cam disc 15, in particular its pull-in element 15A and its push-out element 15B, with regard to the pin 2. Hence, there is no load on the hollow eccentric cam disc 15 in the final condition/locked position.

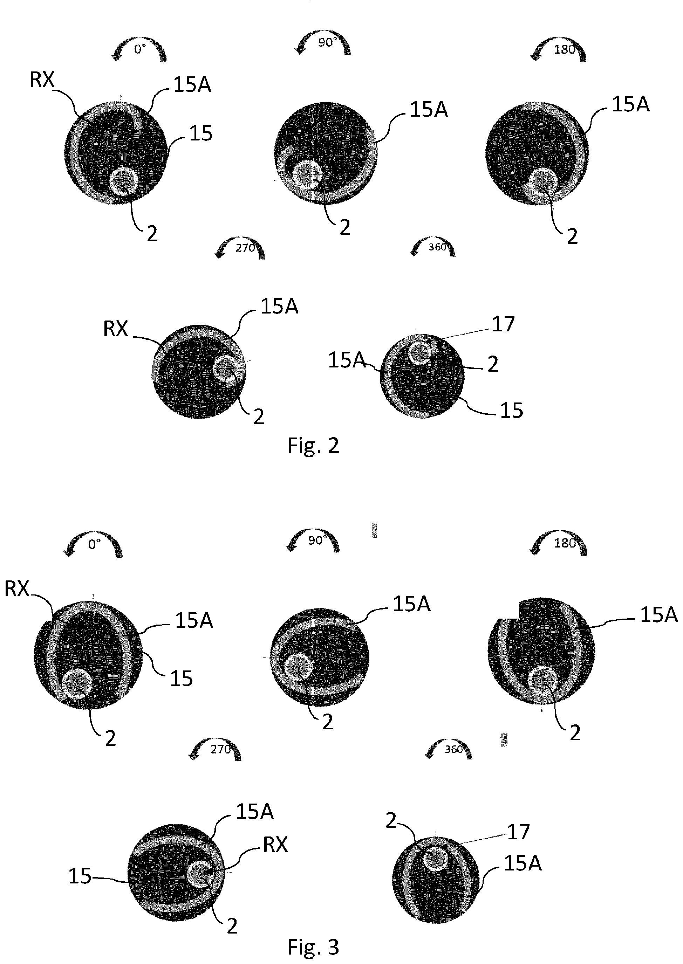

Fig. 2 shows a schematic illustration of an eccentric cam disc 15 in five different angles of rotation.

The eccentric cam disc 15 can be integrated in an aircraft hatch 10 according to the embodiment of Fig. 1A-1D. The eccentric cam disc 15 of Fig. 2 differs from the eccentric cam disc 15 of Fig. 1A-1D in that the pull-in element 15A is C-shaped. Further, the gear unit 16 is not limited to a planetary gear. As it is illustrated in Fig. 2, the eccentric cam disc 15 does not include a push-out element 15B.

In Fig. 2 the exemplary eccentric cam disc 15 is illustrated in a reference position having an angle of rotation of 0° as well as in an angle of rotation of about 90°, of about 180°, of about 270° and of about 360° based on the reference position. Exemplarily, the pin 2 is in contact with the pull-in element 15A in the angle of rotation of about 180° and of about 270°. Nevertheless, in the final condition, that means in the angle of rotation of about 360°, there is a radial gap 17 between the eccentric cam disc 15, in particular its pull-in element 15A, with regard to the pin 2. Hence, there is no load on the eccentric cam disc 15 in the final condition. For example, the eccentric cam disc 15 can also rotate more than 360°.

Fig. 3 shows a schematic illustration of another eccentric cam disc 15 in five different angles of rotation.

The eccentric cam disc 15 can be integrated in an aircraft hatch 10 according to the embodiment of Fig. 1A-1D. The eccentric cam disc 15 of Fig. 3 differs from the eccentric cam disc 15 of Fig. 1A-1D in that the pull-in element 15A is U- or V-shaped. For example, a bottom of the U- or V-shape basically corresponds to the rotational axis RX of the eccentric cam disc 15.

In Fig. 3 the exemplary eccentric cam disc 15 is illustrated in a reference position having an angle of rotation of 0° as well as in an angle of rotation of about 90°, of about 180°, of about 270° and of about 360° based on the reference position.

Exemplarily, the pin 2 is in contact with the pull-in element 15A in the angle of rotation of about 180° and of about 270°. Nevertheless, in the final condition, that means in the angle of rotation of about 360°, there is a radial gap 17 between the eccentric cam disc 15, in particular its pull-in element 15A, with regard to the pin 2. Hence, there is no load on the eccentric cam disc 15 in the final condition.

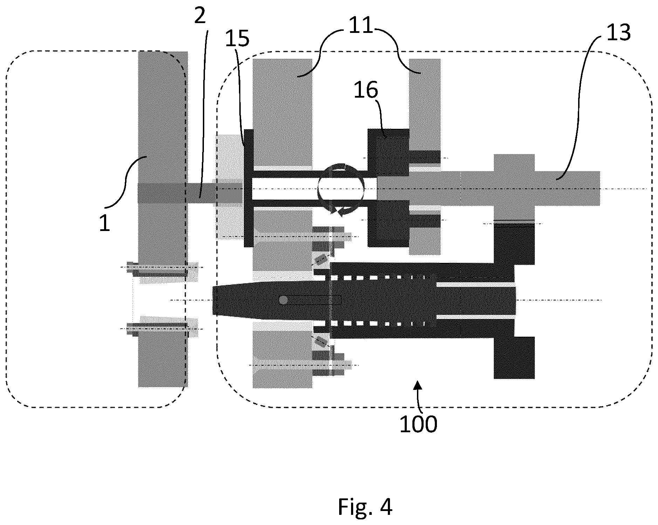

Fig. 4 shows a schematic illustration of an aircraft hatch 10.

The aircraft hatch 10 can be configured as an aircraft hatch 10 according to the embodiments of Fig. 1A-1D, 2, 3. The aircraft hatch 10 of Fig. 4 differs from the aircraft hatch 10 of Fig. 1A-1D in particular in that the planetary gear 16 is spaced apart from the eccentric cam disc 15.

For example, the ring gear of the planetary gear 16 may correspond to a shaft, which is coupled to the eccentric cam disc 15. In particular, the planetary gear 16 is fixed to a hatch frame 11, which is not the hatch frame 11 at the lateral side of the aircraft hatch 10. Advantageously, a distance between the fuselage frame 1 and the hatch frame 11 can be minimized.

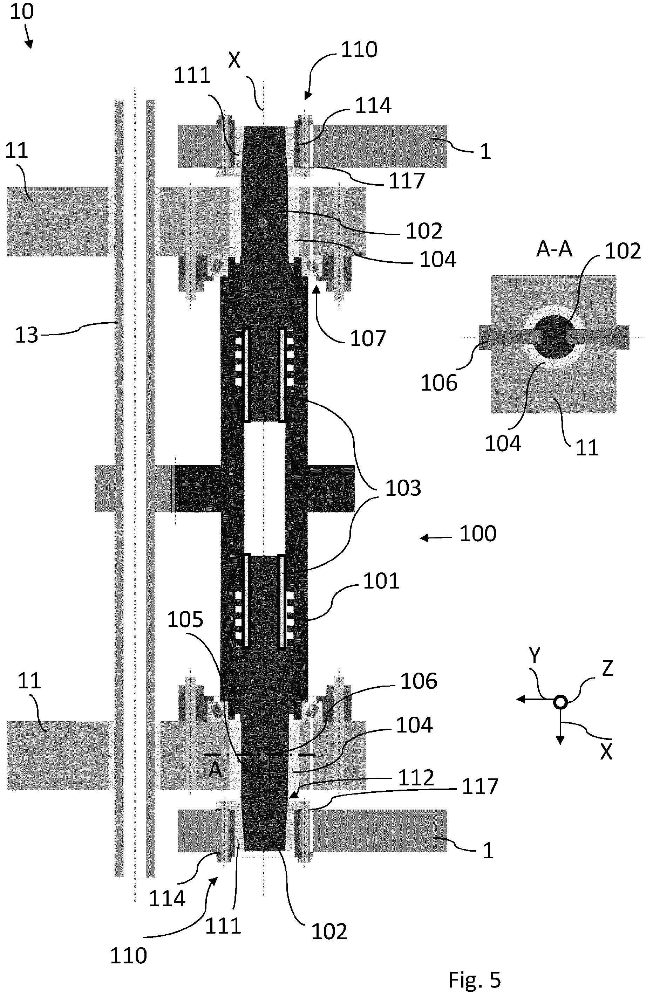

Fig. 5 shows a schematic illustration of a hatch locking device 100 with two opposing locking bolts 102 in a locked condition. In the illustrated locked condition, the hatch locking device 100 is integrated in an aircraft hatch 10 and locked to a fuselage frame 1.

The hatch locking device 100 comprises a drivable spindle drive 101 which extends in a longitudinal axis X. The drivable spindle drive 101 is fixed in relation to a hatch frame 11 of the aircraft hatch 10 along the longitudinal axis X. In particular, the drivable spindle drive 101 is arranged between two adjacent hatch frames 11. Thereby, the drivable spindle drive 101 is mounted to the two adjacent hatch frames 11 by means of a roller bearing 107, which is supported by the hatch frame 11. Preferably, the roller bearing 107 is tapered. Furthermore, the drivable spindle drive 101 comprises a spur gear which is engaged with a drive system 13 of the aircraft hatch 10. In Fig. 5, the drive system 13 comprises a spur gear configured to be engaged with the spur gear of the drivable spindle drive 101, for example.

Further, the hatch locking device 100 comprises the two opposing locking bolts 102 which are driven by the drivable spindle drive 101. A head region of the two locking bolts 102 contains a conical shape. The two opposing locking bolts 102 are guided along the longitudinal axis X. For driving the two opposing locking bolts 102 the drivable spindle drive 101 is rotated about the longitudinal axis X. Therefore, one of the two locking bolts 102 contains a left-hand thread, wherein the other locking bolt 102 contains a right-hand thread. For example, the downwards oriented locking bolt 102 contains the left-hand thread and the upwards oriented locking bolt 102 contains the right-hand thread, as it is illustrated in Fig. 5. Furthermore, the drivable spindle drive 101 is self-securing, which means the locking bolts 102 are not able to drive the drivable spindle drive 101. Optionally, the drivable spindle drive 101 comprises a trapezoidal inner thread and the two locking bolts 102 comprise a corresponding trapezoidal outer thread.

Additionally, the hatch locking device 100 comprises two adjustment bush assemblies 110 each being mounted on the fuselage frame 1. The two adjustment bush assemblies 110 are configured to receive the two opposing locking bolts 102 such that the hatch locking device 100 is positive-locking connectable in the longitudinal axis X and in two axles Y, Z both being perpendicular to the longitudinal axis X.

Each adjustment bush assembly 110 comprises a first eccentric bush 111. The first eccentric bush 111 contains a bolt receptacle 112 which is oriented centrally along the longitudinal axis X for receiving the locking bolt 102 such that the hatch locking device 100 is positive-locking connectable in all directions, i.e. the axles X, Y and Z. The bolt receptacle 112 has a conical shape corresponding to the conical shape of the locking bolt 102. In this embodiment, the first eccentric bush 111 contains a cylindrical shell surface, but is not limited to such a shape.

Moreover, each adjustment bush assembly 110 comprises a second eccentric bush 114. The second eccentric bush 114 partly surrounds the first eccentric bush 111 on its outer surface. Preferably, the first eccentric bush 111 and the second eccentric bush 114 each basically comprise a same axle offset.

Each adjustment bush assembly 110 further comprises a shim washer 117 for adapting a distance between the at least one locking bolt 102 and the first eccentric bush 111 along the longitudinal axis X. For example, the adjustment bush assembly 110 includes at least one fastening screw for fastening the adjustment bush assembly 110 or the first eccentric bush 111 at the fuselage frame 11. The fastening screw is oriented parallel to the longitudinal axis X. By varying a thickness of the shim washer 117 the first eccentric bush 111 can be positioned closer to or further away from the locking bolt 102. At an installation of the hatch locking device 100 the thickness of the shim washer can be chosen such that the two opposing locking bolts 102 are received in the first eccentric bushes 111 basically at the same time. That means depending on manufacturing tolerances of the fuselage frame 1 and the hatch frame 11, respectively, the shim washer 117 compensates a distance along the longitudinal axis X.

Furthermore, axial forces are transferred by the conical shape of the locking bolt 102 via the drivable spindle drive 101 and via the tapered roller bearing 107 to the hatch frame 11. Alternatively or additionally, the two opposing locking bolts 102 are arranged between two adjacent hatch frames 11.

Further, an end region of the locking bolt 102 can be encased in a bolt bush 103, as illustrated in Fig. 1. The bolt bush 103 can slide inside the drivable spindle drive 101 for supporting the locking bolt 102 against a torque perpendicular to the longitudinal axis X.

Preferably, the hatch frame 11 houses a hatch bush 104 which is penetrated by the slidable locking bolt 102. In particular, the hatch bush 104 is fixed in relation to the hatch frame 11.

Optionally, the locking bolt 102 comprises a groove 105 oriented along the longitudinal axis X for securing the locking bolt 102 against rotation around the longitudinal axis X. Thereby, a bolt or a pin 106 causes a positive-locking connection between the locking bolt 102, the hatch bush 104 and the hatch frame 11 when being inserted into the groove 105 through the hatch bush 104 and the hatch frame 11, as it is illustrated in view A-A in Fig. 5.

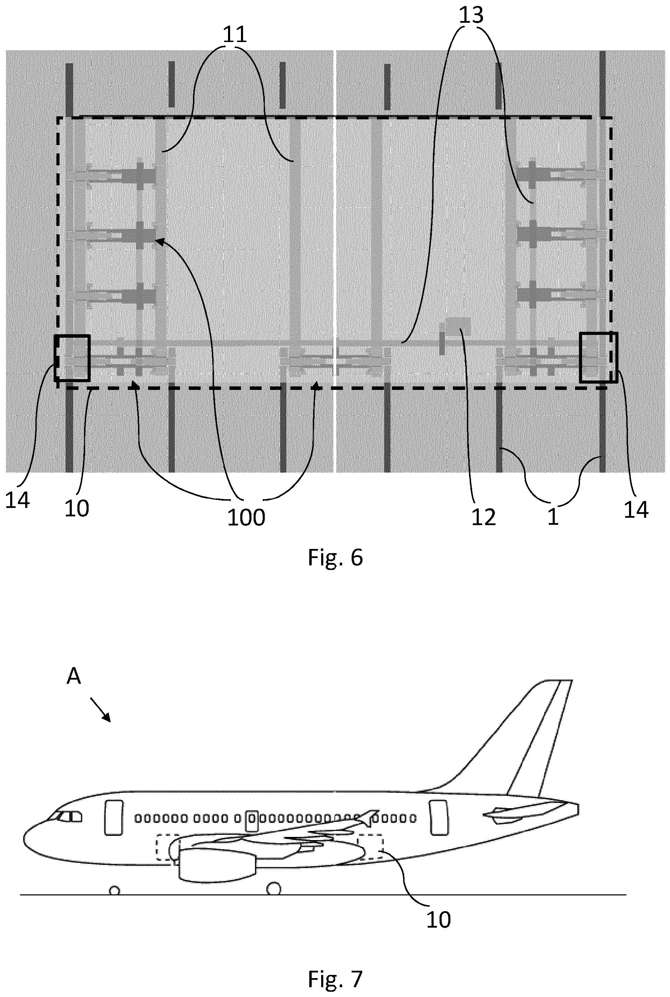

Fig. 6 shows a schematic illustration of an aircraft hatch 10 with six hatch locking devices 100 each having one locking bolt 102 and with three hatch locking devices 100 each having two opposing locking bolts 102.

The aircraft hatch 10 is attached by a hinge to a fuselage of an aircraft. Preferably, the aircraft hatch 10 is attached on one side of the aircraft hatch 10 to the fuselage. More particularly, the aircraft hatch 10 is attached by a multi-part hinge, and swivels outwards during the opening movement.

The six hatch locking devices 100 with one locking bolt 102 are exemplarily arranged at a lateral side of the aircraft hatch 10, wherein the lateral side extends along the orientation of a fuselage frame 1. The three hatch locking devices 100 with two locking bolts 102 are arranged at a horizontal side of the aircraft hatch being not the hinged side, wherein the horizontal side extends perpendicular to the orientation of the fuselage frame 1.

Further, the aircraft hatch 10 comprises a drive system 13 which mechanically couples the drive unit 12 with the hatch locking devices 100. Thereby, the drive system 13 comprises a main drive shaft configured to mechanically couple the three hatch locking devices 100 with two opposing locking bolts 102. Furthermore, the drive system 13 comprises two drive belts 13 configured to mechanically couple the main drive shaft 13 with the hatch locking devices 100 with one locking bolt 102. Alternatively or additionally, the drive system 13 can comprise a worm drive for mechanically coupling the drive unit 12 to the hatch locking devices 100.

The aircraft hatch 10 exemplarily comprises two pull-in devices 14 each being mounted on the opposite lateral side of the aircraft hatch 14. Preferably, the two pull-in devices 14 are arranged next to the hatch locking devices 100 with two locking bolts 102 at the horizontal side of the aircraft hatch 10 being not the hinged side. Each pull-in device 14 can have the features as described with regard to Fig. 1A-1D, 2, 3, but the two pull-in devices 14 do not need to be configured identical and can differ from each other where appropriate.

The aircraft hatch 10 and the hatch locking device 100, respectively, can transfer radial forces to align surfaces under cabin pressure. Moreover, they can transfer shear loads to stiffen a door cut-out and can transfer compressive forces along the longitudinal axis X to prevent clash.

Fig. 7 shows a schematic illustration of an aircraft A with an aircraft hatch 10 comprising a pull-in device 14. Optionally, the aircraft hatch 10 is configured as a cargo hold hatch.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both.

### Reference list

- 1: fuselage frame
- 2: pin
- 10: aircraft or spacecraft hatch
- 11: hatch frame
- 12: drive unit
- 13: drive system
- 14: pull-in device
- 15: eccentric cam disc
- 15A: pull-in element
- 15B: push-out element
- 16: gear unit
- 17: radial gap
- 100: hatch locking device
- 101: spindle drive
- 102: locking bolt
- 103: bolt bush
- 104: hatch bush
- 105: groove
- 106: bolt or pin
- 107: roller bearing
- 110: adjustment bush assembly
- 111: first eccentric bush
- 112: bolt receptacle
- 113: serrated plate
- 114: second eccentric bush
- 115: teeth
- 116: nut
- 117: shim washer
- 118: teeth

- A: aircraft or spacecraft
- L: first section
- M: second section
- RX: rotational axis
- X: longitudinal axis
- Y: axis
- Z: axis

## Claims

1. Air- or spacecraft hatch (10), comprising:
a hatch frame (11);
a hatch locking device (100) being mounted to the hatch frame (11) and
comprising a drivable spindle drive (101) that drives at least one locking bolt (102) of the hatch locking device (100);
a pull-in device (14) for forcing the air- or spacecraft hatch (10) to close being arranged at a lateral side of the air- or spacecraft hatch (10); and
a drive unit (12) being mounted to the hatch frame (11) and simultaneously driving the drivable spindle drive (101) and the pull-in device (14).

2. Air- or spacecraft hatch (10) according to claim 1, further comprising a drive system (13) which mechanically couples the drive unit (12) with the pull-in device (14) and the hatch locking device (100).

3. Air- or spacecraft hatch (10) according to claim 1 or 2, wherein the drive system (13) comprises at least one of the following: a main drive shaft, a drive belt or a worm drive.

4. Air- or spacecraft hatch (10) according to one of the preceding claims, wherein the pull-in device (14) comprises an eccentric cam disc (15) being rotationally coupled to the drive system (13) and being configured to interact with a pin (2) being mounted on a fuselage frame (1).

5. Air- or spacecraft hatch (10) according to claim 4, wherein the eccentric cam disc (15) comprises a first section (L) being configured to transfer a radial force between the pin (2) and the eccentric cam disc (15), and a second section (M) being configured such that the pin (2) basically corresponds to a rotational axis (RX) of the eccentric cam disc (15) during rotation.

6. Air- or spacecraft hatch (10) according to claim 4 or 5, wherein the pull-in device (14) further comprises a gear unit (16) being arranged between the eccentric cam disc (15) and the drive system (13) for synchronizing the rotation of the eccentric cam disc (15) and the rotation of the drivable spindle drive (101) such that the air- or spacecraft hatch (10) is at least almost closed before a bolt receptacle (112) of the hatch locking device (100) receives the at least one locking bolt (102).

7. Air- or spacecraft hatch (10) according to claim 6, wherein the gear unit (16) is configured as a planetary gear.

8. Air- or spacecraft hatch (10) according to claim 6 or 7, wherein the gear unit (16) has a transmission ratio in a range from about 8:1 to about 12:1 between the eccentric cam disc (15) and the drive system (13).

9. Air- or spacecraft hatch (10) according to one of the claims 4 to 8, wherein the eccentric cam disc (15) comprises a push-out element (15B) for forcing the air- or spacecraft hatch (10) to open.

10. Air- or spacecraft hatch (10) according to one of the preceding claims, comprising at least two hatch locking devices (100), wherein at least one hatch locking device (100) comprises two opposing locking bolts (102) and wherein at least one hatch locking device (100) comprises one locking bolt (102).

11. Air- or spacecraft (A) with an air- or spacecraft hatch (10) according to one of the preceding claims.

12. Air- or spacecraft (A) according to claim 11, wherein the air- or spacecraft hatch (10) is configured as a cargo hold hatch.

## Patentansprüche

1. Luft- oder Raumfahrzeugklappe (10), Folgendes umfassend:
einen Klappenrahmen (11);
eine Klappenverriegelungsvorrichtung (100), die an dem Klappenrahmen (11) montiert ist und einen antreibbaren Spindelantrieb (101) umfasst, der mindestens einen Verriegelungsbolzen (102) der Klappenverriegelungsvorrichtung (100) antreibt;
eine Einziehvorrichtung (14), um die Luft- oder Raumfahrzeugklappe (10) forciert zu schließen, die an einer lateralen Seite der Luft- oder Raumfahrzeugklappe (10) angeordnet ist; und
eine Antriebseinheit (12), die an dem Klappenrahmen (11) montiert ist und gleichzeitig den antreibbaren Spindelantrieb (101) und die Einziehvorrichtung (14) antreibt.

2. Luft- oder Raumfahrzeugklappe (10) nach Anspruch 1, ferner umfassend ein Antriebssystem (13), das die Antriebseinheit (12) mechanisch mit der Einziehvorrichtung (14) und der Klappenverriegelungsvorrichtung (100) koppelt.

3. Luft- oder Raumfahrzeugklappe (10) nach Anspruch 1 oder 2, wobei das Antriebssystem (13) mindestens eines der Folgenden umfasst: eine Hauptantriebswelle, einen Antriebsriemen oder einen Schneckentrieb.

4. Luft- oder Raumfahrzeugklappe (10) nach einem der vorhergehenden Ansprüche, wobei die Einziehvorrichtung (14) eine exzentrische Nockenscheibe (15) umfasst, die mit dem Antriebssystem (13) drehend gekoppelt und dazu ausgelegt ist, mit einem an einem Rumpfspant (1) montierten Stift (2) zusammenzuwirken.

5. Luft- oder Raumfahrzeugklappe (10) nach Anspruch 4, wobei die exzentrische Nockenscheibe (15) einen ersten Abschnitt (L), der dazu ausgelegt ist, eine radiale Kraft zwischen dem Stift (2) und der exzentrische Nockenscheibe (15) zu übertragen, und einen zweiten Abschnitt (M) umfasst, der derart ausgelegt ist, dass der Stift (2) während einer Drehung im Wesentlichen einer Drehachse (RX) der exzentrischen Nockenscheibe (15) entspricht.

6. Luft- oder Raumfahrzeugklappe (10) nach Anspruch 4 oder 5, wobei die Einziehvorrichtung (14) ferner eine Getriebeeinheit (16) umfasst, die zwischen der exzentrischen Nockenscheibe (15) und dem Antriebssystem (13) angeordnet ist, um die Drehung der exzentrischen Nockenscheibe (15) und die Drehung des antreibbaren Spindelantriebs (101) zu synchronisieren, so dass die Luft- oder Raumfahrzeugklappe (10) zumindest nahezu geschlossen ist, bevor eine Bolzenaufnahme (112) der Klappenverriegelungsvorrichtung (100) den mindestens einen Verriegelungsbolzen (102) aufnimmt.

7. Luft- oder Raumfahrzeugklappe (10) nach Anspruch 6, wobei die Getriebeeinheit (16) als Planetengetriebe ausgelegt ist.

8. Luft- oder Raumfahrzeugklappe (10) nach Anspruch 6 oder 7, wobei die Getriebeeinheit (16) zwischen der exzentrischen Nockenscheibe (15) und dem Antriebssystem (13) ein Übersetzungsverhältnis in einem Bereich von etwa 8:1 bis etwa 12:1 aufweist.

9. Luft- oder Raumfahrzeugklappe (10) nach einem der Ansprüche 4 bis 8, wobei die exzentrische Nockenscheibe (15) ein Aufdrückelement (15B) umfasst, um die Luft- oder Raumfahrzeugklappe (10) forciert zu öffnen.

10. Luft- oder Raumfahrzeugklappe (10) nach einem der vorhergehenden Ansprüche, umfassend mindestens zwei Klappenverriegelungsvorrichtungen (100), wobei mindestens eine Klappenverriegelungsvorrichtung (100) zwei gegenüberliegende Verriegelungsbolzen (102) umfasst und wobei mindestens eine Klappenverriegelungsvorrichtung (100) einen Verriegelungsbolzen (102) umfasst.

11. Luft- oder Raumfahrzeug (A) mit einer Luft- oder Raumfahrzeugklappe (10) nach einem der vorhergehenden Ansprüche.

12. Luft- oder Raumfahrzeug (A) nach Anspruch 11, wobei die Luft- oder Raumfahrzeugklappe (10) als Frachtraumklappe ausgelegt ist.

## Revendications

1. Trappe d'aéronef ou d'engin spatial (10), comprenant :
un cadre de trappe (11) ;
un dispositif de verrouillage de trappe (100) monté sur le cadre de trappe (11) et comprenant un entraînement à broche (101) pouvant être entraîné qui entraîne au moins une goupille de verrouillage (102) du dispositif de verrouillage de trappe (100) ;
un dispositif de traction (14) destiné à forcer la fermeture de la trappe d'aéronef ou d'engin spatial (10), disposé sur un côté latéral de la trappe d'aéronef ou d'engin spatial (10) ; et
une unité d'entraînement (12) montée sur le cadre de trappe (11) et entraînant simultanément l'entraînement à broche (101) pouvant être entraîné et le dispositif de traction (14).

2. Trappe d'aéronef ou d'engin spatial (10) selon la revendication 1, comprenant en outre un système d'entraînement (13) qui accouple mécaniquement l'unité d'entraînement (12) au dispositif de traction (14) et au dispositif de verrouillage de trappe (100).

3. Trappe d'aéronef ou d'engin spatial (10) selon la revendication 1 ou 2, le système d'entraînement (13) comprenant au moins l'un parmi : un arbre d'entraînement principal, une courroie d'entraînement ou un entraînement à vis sans fin.

4. Trappe d'aéronef ou d'engin spatial (10) selon l'une des revendications précédentes, le dispositif de traction (14) comprenant un disque à excentrique (15) accouplé en rotation au système d'entraînement (13) et conçu pour entrer en interaction avec un axe (2) monté sur un cadre de fuselage (1).

5. Trappe d'aéronef ou d'engin spatial (10) selon la revendication 4, le disque à excentrique (15) comprenant une première section (L) conçue pour transférer une force radiale entre l'axe (2) et le disque à excentrique (15), et une seconde section (M) conçue de sorte que l'axe (2) corresponde essentiellement à un axe de rotation (RX) du disque à excentrique (15) lors de la rotation.

6. Trappe d'aéronef ou d'engin spatial (10) selon la revendication 4 ou 5, le dispositif de traction (14) comprenant en outre une unité d'engrenage (16) placée entre le disque de came excentrique (15) et le système d'entraînement (13) pour synchroniser la rotation du disque à excentrique (15) et la rotation du mécanisme d'entraînement à broche (101) pouvant être entraîné de sorte que la trappe d'aéronef ou d'engin spatial (10) soit au moins presque fermée avant qu'un réceptacle à goupille (112) du dispositif de verrouillage de trappe (100) ne reçoive l'au moins une goupille de verrouillage (102).

7. Trappe d'aéronef ou d'engin spatial (10) selon la revendication 6, l'unité d'engrenage (16) étant conçue comme un engrenage planétaire.

8. Trappe d'aéronef ou d'engin spatial (10) selon la revendication 6 ou 7, l'unité d'engrenage (16) présentant un rapport de transmission dans une plage comprise entre environ 8:1 et environ 12:1 entre le disque à excentrique (15) et le système d'entraînement (13).

9. Trappe d'aéronef ou d'engin spatial (10) selon l'une des revendications 4 à 8, le disque à excentrique (15) comprenant un élément de pousser (15B) pour forcer l'ouverture de la trappe d'aéronef ou d'engin spatial (10).

10. Trappe d'aéronef ou d'engin spatial (10) selon l'une quelconque des revendications précédentes, comprenant au moins deux dispositifs de verrouillage de trappe (100), au moins un dispositif de verrouillage de trappe (100) comprenant deux goupilles de verrouillage (102) opposées et au moins un dispositif de verrouillage de trappe (100) comprenant une goupille de verrouillage (102).

11. Aéronef ou engin spatial (A) comportant une trappe d'aéronef ou d'engin spatial (10) selon l'une des revendications précédentes.

12. Aéronef ou engin spatial (A) selon la revendication 11, la trappe d'aéronef ou d'engin spatial (10) étant conçue comme une trappe de soute.
